(19) Europäisches Patentamt
European Patent Office
Office européen des brevets

(11) **EP 2 064 584 B1**

(12) **FASCICULE DE BREVET EUROPEEN**

(45) Date de publication et mention de la délivrance du brevet:
**15.07.2015 Bulletin 2015/29**

(21) Numéro de dépôt: **07848348.4**

(22) Date de dépôt: **20.09.2007**

(51) Int Cl.:
**G02B 27/01** *(2006.01)*          **G02B 3/08** *(2006.01)*
**G02B 5/18** *(2006.01)*

(86) Numéro de dépôt international:
**PCT/FR2007/051976**

(87) Numéro de publication internationale:
**WO 2008/035016 (27.03.2008 Gazette 2008/13)**

(54) **AGENCEMENT D'AFFICHAGE ELECTRONIQUE**

ELEKTRONISCHE ANZEIGENANORDNUNG

ELECTRONIC DISPLAY ASSEMBLY AGENCEMENT D'AFFICHAGE ELECTRONIQUE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.09.2006 FR 0653856**

(43) Date de publication de la demande:
**03.06.2009 Bulletin 2009/23**

(73) Titulaires:
• **Essilor International
(Compagnie Générale d'Optique)
94220 Charenton-le-Pont (FR)**
• **Moliton, Maxime
75015 Paris (FR)**

(72) Inventeur: **La désignation de l'inventeur n'a pas encore été déposée**

(74) Mandataire: **Lenne, Laurence et al
Feray Lenne Conseil
Le Centralis
63, avenue du Général Leclerc
92340 Bourg-la-Reine (FR)**

(56) Documents cités:
EP-A- 1 498 765          WO-A-03/081320
WO-A-2006/016086          WO-A1-2005/124427
FR-A- 2 677 604          FR-A- 2 712 994
FR-A- 2 868 551          GB-A- 2 274 727
US-A1- 2002 015 114          US-A1- 2003 086 135

• **YOUNG J E R: "HEAD-MOUNTED DISPLAY" 1 mai 1983 (1983-05-01), IBM TECHNICAL DISCLOSURE BULLETIN, IBM CORP. NEW YORK, US, PAGE(S) 6373-6374 , XP002005429 ISSN: 0018-8689 page 6374, ligne 6 - ligne 7; figure**

**EP 2 064 584 B1**

**Description**

L'invention concerne un agencement d'affichage électronique monté sur une monture du type paire de lunettes.

Un tel agencement est décrit dans le document de brevet FR 04 50 655.

Ce document décrit un conduit optique destiné en particulier à un agencement d'affichage électronique et destiné à transmettre des signaux de lumière d'une de ses extrémités, dite surface d'entrée, à son autre extrémité dite surface de sortie, vers l'oeil d'un utilisateur pour la vision d'une image virtuelle. Ce conduit comporte sur sa surface d'entrée un composant diffractif, qui est de préférence supporté par une surface porteuse asphérique de révolution.

Le but d'un tel agencement est de permettre l'obtention d'une image de plus grande taille, tout en conservant une bonne qualité d'image et quelle que soit la longueur du conduit. Il peut être ainsi obtenu un conduit permettant l'affichage d'une image de taille angulaire supérieure à 15° et de bonne qualité.

Il est cependant recherché d'obtenir une image de taille encore plus grande et de qualité accrue.

L'invention résout ce problème en proposant un agencement d'affichage qui permet d'obtenir une image sur un champ de vision supérieur à 21°, d'une qualité atteignant le standard VGA (Video Graphics Array) ou WVGA (Wide Video Graphics Array), tout en étant d'encombrement limité, afin de rester léger, stable, confortable et esthétique.

Par ailleurs, les documents de brevet WO 2005/124427 et GB 2 274 727 décrivent l'association à un guide d'onde, d'une lentille de champ intercalée entre l'écran et la surface d'entrée du guide, comportant une surface utile plane disposée en face de l'écran centré sur l'axe optique de la lentille de champ et une surface utile asphérique.

L'invention propose un agencement de lentille d'encombrement plus réduit, afin d'obtenir un afficheur léger, stable, confortable et esthétique.

Pour ce faire, l'invention propose un agencement d'affichage électronique, comportant un conduit optique destiné à transmettre des signaux de lumière émis d'un écran miniature, d'une de ses extrémités dite surface d'entrée à son autre extrémité dite surface de sortie, vers l'oeil d'un utilisateur pour la vision d'une image virtuelle, agencement caractérisé en ce qu'il comporte une lentille de champ intercalée entre ledit écran et ladite surface d'entrée, dont une surface utile plane est disposée en face de l'écran centré sur l'axe optique de ladite lentille de champ et une surface utile asphérique est disposée en face de la surface d'entrée, l'axe optique de la lentille de champ et celui du conduit étant confondus et en ce que ladite surface utile plane est collée à l'écran.

Selon un mode de réalisation préféré, l'écran est au moins partiellement encastré dans ladite surface utile plane.

De préférence, ladite surface d'entrée et ladite surface utile asphérique sont séparées par un espace d'air.

Avantageusement, le positionnement relatif de ladite lentille de champ et du conduit est effectué au moyen d'un agencement d'au moins deux pions coopérant avec au moins deux trous correspondants.

Les deux pions peuvent être portés par ladite lentille et les deux trous par la surface d'entrée du conduit.

Lesdits pions peuvent être portés par un cadre d'entretoise et lesdits trous par la surface d'entrée du conduit et par la surface de sortie de la lentille de champ.

Très avantageusement, ladite surface utile asphérique est diffractive.

De préférence, l'épaisseur de ladite lentille de champ est définie de sorte que la proximité de l'image de la surface diffractive de la lentille de champ soit située au-delà des plages d'accommodation standard d'un utilisateur amétrope.

Avantageusement, la proximité de l'image de la surface diffractive de la lentille de champ est soit supérieure à 0 Dioptrie, soit inférieure à -4 Dioptries.

Et, de préférence, la proximité de l'image de la surface diffractive de la lentille de champ est éloignée de celle de l'image de l'écran d'au moins 4 Dioptries en valeur absolue.

De préférence, ladite surface utile asphérique diffractive est de type « kinoform » répondant à l'équation d'une porteuse asphérique de révolution, sommée à celle d'un second composant asphérique de révolution modulo une profondeur de saut.

Ladite surface utile asphérique peut comprendre une surface traversée par la lumière dont le signe de courbure locale change au moins une fois.

Et de préférence, ladite surface utile asphérique comprend au moins un point d'inflexion sur son profil radial pour lequel la dérivée seconde selon la distance radiale par rapport au centre de la surface utile s'annule et change de signe à son passage.

Ledit conduit comporte de préférence, également une surface diffractive asphérique sur sa surface d'entrée.

De préférence, la surface utile asphérique diffractive de la surface d'entrée du dit conduit est de type « kinoform » répondant à l'équation d'une porteuse asphérique de révolution, sommée à celle d'un deuxième composant asphérique de révolution modulo une profondeur de saut.

Et avantageusement, la porteuse asphérique de ladite surface utile asphérique de la surface d'entrée du dit conduit comprend une surface traversée par la lumière dont le signe de courbure locale change au moins une fois.

De préférence, ladite surface utile asphérique de la surface d'entrée du dit conduit comprend au moins un point d'inflexion sur son profil radial pour lequel la dérivée seconde selon la distance radiale par rapport au centre de la surface utile s'annule et change de signe à son passage.

Ladite surface d'entrée du conduit et ladite surface utile asphérique de la lentille de champ sont sensiblement parallèles, avantageusement.

La valeur absolue de la différence pour une abscisse radiale donnée des pentes de ladite surface utile d'entrée du conduit et des pentes harmonisées sur ladite surface utile asphérique de la lentille de champ peut être inférieure à 20% de la valeur maximale de la pente de l'une ou de l'autre de ces valeurs à cette abscisse.

De préférence, la valeur absolue de la différence des puissances diffractives des faces d'entrée du conduit et de la surface asphérique de ladite lentille de champ, divisée par le maximum de ces mêmes puissances diffractives est inférieur ou égal à 0.25.

Et avantageusement, on impose que :

ABS[(Ru.N_SC)-N_SE]/max[(Ru.N_SC),N_SE] soit inférieure ou égal à 25% où
N_SE le nombre d'anneaux sur la surface utile de la face d'entrée du conduit (1A)
N_SC le hombre d'anneaux sur la surface utile de la surface asphérique de ladite lentille de champ,
Ru le coefficient d'harmonisation des surfaces utiles des faces d'entrée du conduit et de la surface asphérique de ladite lentille de champ, défini par la valeur de la surface utile de la face d'entrée du conduit divisée par la surface utile de la surface asphérique de ladite lentille de champ, pour une valeur donnée de diamètre de pupille.

De préférence, le calcul de Ru est réalisé avec un diamètre de pupille égal à 8mm.

Avantageusement, l'écran comporte un pixel couleur dont la taille est inférieure à $11\mu m$.

L'invention est décrite ci-après plus en détail à l'aide de figures ne représentant que des modes de réalisation préférés de l'invention.

La figure 1 est une vue en coupe longidudinale d'un agencement d'affichage conforme à l'invention.

La figure 2 est une vue de détail de la figure 1 d'une première variante de réalisation de l'interface écran - lentille de champ.

La figure 3 est une vue de détail de la figure 1 d'une deuxième variante de réalisation de l'interface écran - lentille de champ.

Les figures 4A et 4B sont des vues de détail, en coupe longitudinale et de face, d'une troisième variante de réalisation de l'interface écran - lentille de champ.

Les figures 5A à 5C sont des vues, en coupe longitudinale et de face, d'une première variante de réalisation de l'interface lentille de champ - conduit optique.

Les figures 6A à 6D sont des vues, en coupe longitudinale et de face, d'une seconde variante de réalisation de l'interface lentille de champ - conduit optique.

La figure 7 est une vue de détail d'un afficheur conforme à l'invention.

La figure 8 représente un graphe de comparaison à une même abscisse radiale de la pente de la surface d'entrée du conduit et de la pente harmonisée sur la surface utile de la surface asphérique d'une lentille de champ constituant l'afficheur conforme à l'invention.

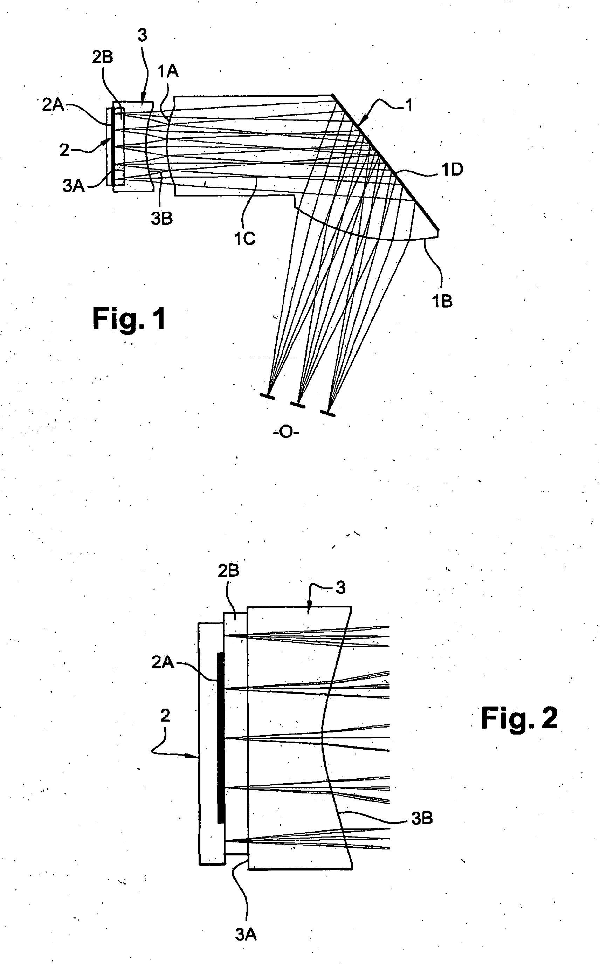

Comme illustré sur la figure 1, l'invention concerne un agencement d'affichage électronique, comportant un conduit optique 1 destiné à transmettre des signaux de lumière émis d'un écran miniature 2, d'une de ses extrémités dite surface d'entrée 1A à son autre extrémité dite surface de sortie 1B, vers l'oeil O d'un utilisateur pour la vision d'une image virtuelle.

Selon l'exemple précis représenté, le guide optique 1 comporte un relais optique 1C formé d'un barreau parallélépipédique destiné à transmettre la lumière selon un axe optique confondu avec son axe longitudinal. A l'extrémité de ce barreau 1C opposée à la surface d'entrée 1A est disposée une paroi de réflexion 1D inclinée par rapport à cet axe longitudinal. La surface de sortie 1B est en fait constituée d'une lentille dont l'axe de révolution est contenu dans un plan de symétrie longitudinal.

De par sa longueur, le barreau 1C assure le positionnement de l'écran miniature 2 suffisamment loin du côté temporal du porteur.

Cet agencement comporte également une lentille de champ 3 intercalée entre l'écran et la surface d'entrée, dont une surface utile plane 3A est disposée en face de l'écran 2 centré sur l'axe optique de la lentille de champ et une surface utile asphérique 3B est disposée en face de la surface d'entrée 1A, l'axe optique de la lentille de champ et celui du conduit étant confondus.

Un espace d'air de faible épaisseur est agencé entre la surface d'entrée 1A et la lentille de champ 3. Il est de préférence inférieur à 4mm au centre.

De préférence, comme illustré sur les figures, la surface utile plane 3A de la lentille de champ est collée sur l'écran 2, et plus précisément sur la lame de protection de verre 2B qui recouvre l'élément actif 2A de cet écran.

L'invention propose plusieurs variantes de réalisation de cette interface écran - lentille de champ.

Comme illustré sur la figure 2, la surface utile 3A de la lentille de champ est plane et est donc appliquée par collage contre la lame de protection de verre 2B de l'écran.

Le fait de s'appuyer sur une face plane simplifie la conception de l'agencement mécanique de déplacement de l'écran 2 pour lé réglage de l'alignement des images droite-gauche, dans le cas d'un binoculaire. On peut ensuite, une fois l'alignement obtenu au moyen d'un banc prévu à cet effet faire prendre la colle via une illumination UV adaptée.

Il faut contrôler assez précisément le spectre d'émission de l'écran pour qu'il ne contienne pas d'UV susceptible de faire prendre la colle pendant qu'on fait le réglage, ce qui impose une contrainte sur les filtres de l'écran. Comme solution, les phases de réglage peuvent être réalisées en utilisant la partie rouge ou verte du spectre lumineux, afin de minimiser le risque de prise de la colle.

Sur la figure 2, la zone d'optimisation sur laquelle sont tracés les rayons est plus grande que la surface active de l'écran, afin de tenir compte de l'amplitude des mouvements de réglage d'alignement et d'assurer une bonne qualité d'image sur toute la plage de réglage d'alignement.

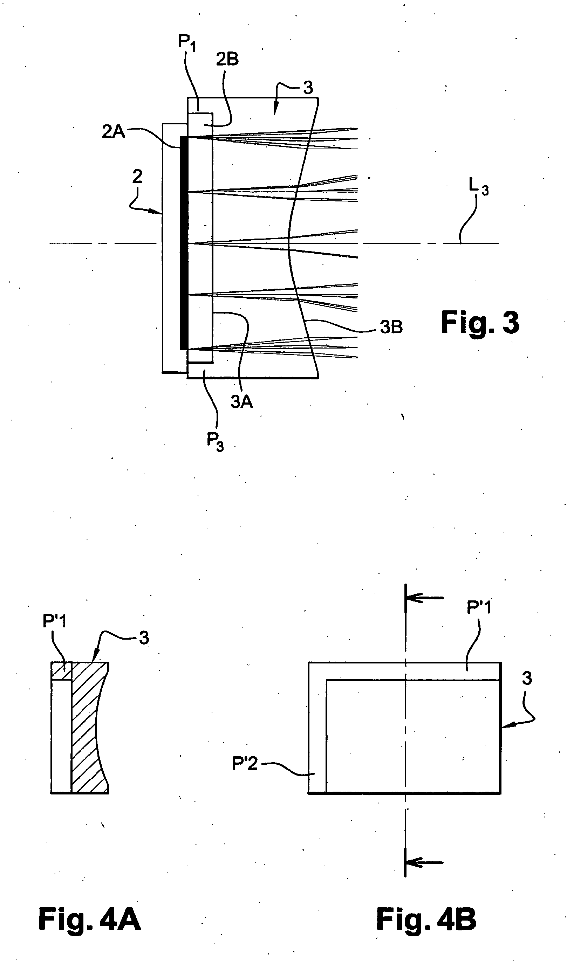

Les figures 3 et 4 illustrent d'autres variantes de réalisation de l'interface écran - lentille de champ.

Ici, le réglage d'alignement n'est pas effectué par déplacement et positionnement de l'écran 2, mais par déplacement électronique de l'image.

Plus précisément, l'écran 2 présente alors une surface active plus grande que la surface déterminée de l'image émise. Le procédé de réglage consiste alors à déplacer cette image émise sur l'écran, afin d'obtenir une position réglée de cette image dans cet écran correspondante à une superposition des deux images virtuelles gauche et droite du binoculaire.

L'écran et plus précisément sa lame de protection 2B peuvent alors être encastrés ou emboîtés dans un agencement pour leur positionnement relatif avec la lentille de champ 3.

On ménage dans la face plane de la lentille de champ 3 un logement ou contre-forme pour la lame de protection 2B de l'écran qui y est collée. Ce logement ou contre-forme est tel qu'il permette de réaliser un positionnement de la surface active de l'écran 2 centré sur l'axe optique de la lentille de champ 3, cet axe étant confondu avec celui du système optique.

Sur la figure 3, la zone d'optimisation sur laquelle sont tracés les rayons est égale à la surface active de l'écran puisqu'on est dans le cas d'un déplacement électronique de l'image.

Ce logement pour la lame de protection 2B de l'écran peut être formé par quatre parois P1, P3. disposées sur toute la périphérie de la surface plane 3A de la lentille de champ, comme illustré par la deuxième variante représentée sur la figure 3 ou par seulement deux parois P'1, P'2 perpendiculaires disposées sur deux côtés adjacents de la surface plane 3A de la lentille de champ, comme illustré par la troisième variante représentée sur les figures 4A et 4B.

Ce logement avec ces parois peut aisément être obtenu par injection lors du moulage de la lentille de champ 3.

La justesse de l'alignement est assurée lors de la phase de mise au point du moule, en agissant directement sur la forme de celui-ci et donc de la lentille de champ moulée.

L'assemblage de l'écran 2 et de la surface plane de la lentille de champ 3, et particulièrement de sa zone optique utile est réalisé au moyen d'une colle optique adaptée.

Grâce à ces variantes, il n'est pas besoin de contrôler l'alignement des images virtuelles droite et gauche au moment du collage de l'écran miniature sur la lentille de champ. Il faut simplement, ainsi que préconisé précédemment, lors de la conception du système, aligner le centre de la zone active de l'écran 2 sur l'axe optique de la lentille de champ 3 et donc sur l'axe optique du système, tout en contrôlant précisément les tolérances de fabrication. Ceci présente l'avantage de minimiser l'excursion de la zone d'affichage de l'image nécessaire pour réaliser un alignement de l'image virtuelle droite sur l'image virtuelle gauche, c'est-à-dire la taille de la zone utile de l'écran miniature et donc in fine l'encombrement final des lunettes binoculaire. Ce collage peut donc se faire individuellement entre chaque lentille de champ et chaque écran miniature, indépendamment et antérieurement au procédé d'alignement des images virtuelles droites et gauche, ce qui, en simplifiant considérablement cette opération, réduit les coûts de fabrication de la lunette binoculaire et de nouveau son encombrement car les dispositifs d'ajustements mécaniques externes utilisés par l'art antérieur sont remplacés par un simple collage.

Il est maintenant précisé la constitution de l'interface lentille de champ 3 - conduit optique 1, qui présente comme déjà indiqué plus haut un espace d'air entre ces deux éléments.

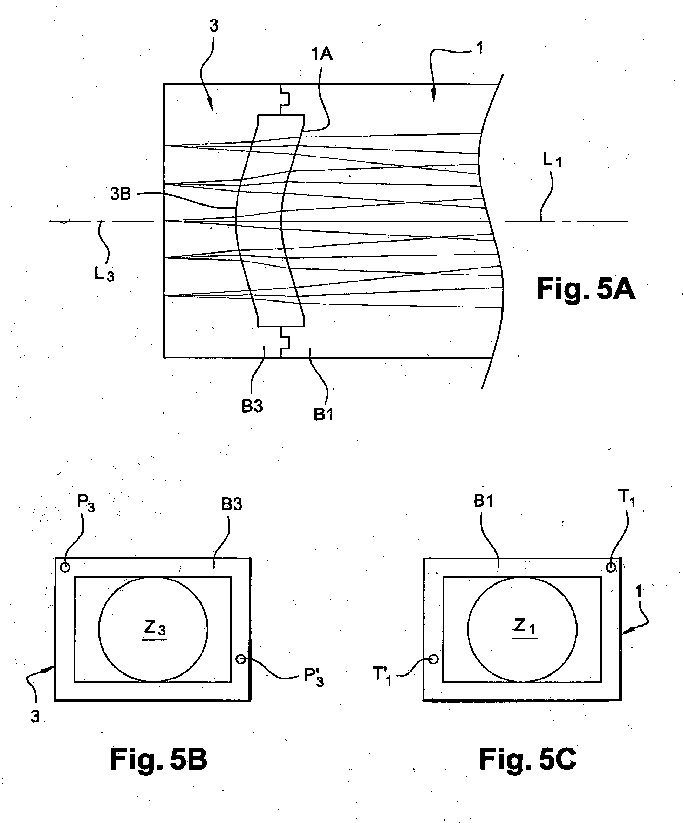

Selon une première variante, représentée sur les figures 5A à 5C, la lentille de champ 3 et le conduit optique 1 sont façonnés de façon à disposer de zones d'interface mécanique en dehors des zones optiques utiles. Ces zones d'interface sont disposées à la périphérie de la surface utile ashérique 3B et de la surface d'entrée asphérique 1A du conduit optique. Ces zones d'interface mécanique ont pour but d'aligner l'axe optique L3 de la lentille de champ 3 avec l'axe optique L1 du conduit optique 1. Ceci est réalisable grâce au procédé d'injection de ces deux éléments qui permet d'adapter la forme du moule de la pièce pour réaliser ces fonctions mécaniques.

Plus précisément, autour de leur zone utile respective Z3 et Z1 et à leur périphérie, la surface de sortie 3B de la lentille de champ et la surface d'entrée 1A du conduit optique comportent une bride B3 et B1 comportant un agencement de pions et trous d'emboîtement. Ici, la lentille de champ 3 est pourvue de deux pions P3 et P3' et le conduit optique de deux trous T1 et T1' d'emboîtement correspondants.

L'assemblage des deux pièces est maintenu en position par collage via une colle adaptée.

Du fait de la grande précision acquise lors de la mise au point et à la répétabilité du procédé, il est possible d'aligner très précisément ces deux pièces et donc in fine, le centre de la zone active de l'écran 2 sur leur axe optique commun. Le système optique est ainsi aligné via l'ajustement du moule lors de l'injection et de la mise au point du procédé. Une fois le système en production, le montage est simple et ne nécessite aucun instrument externe.

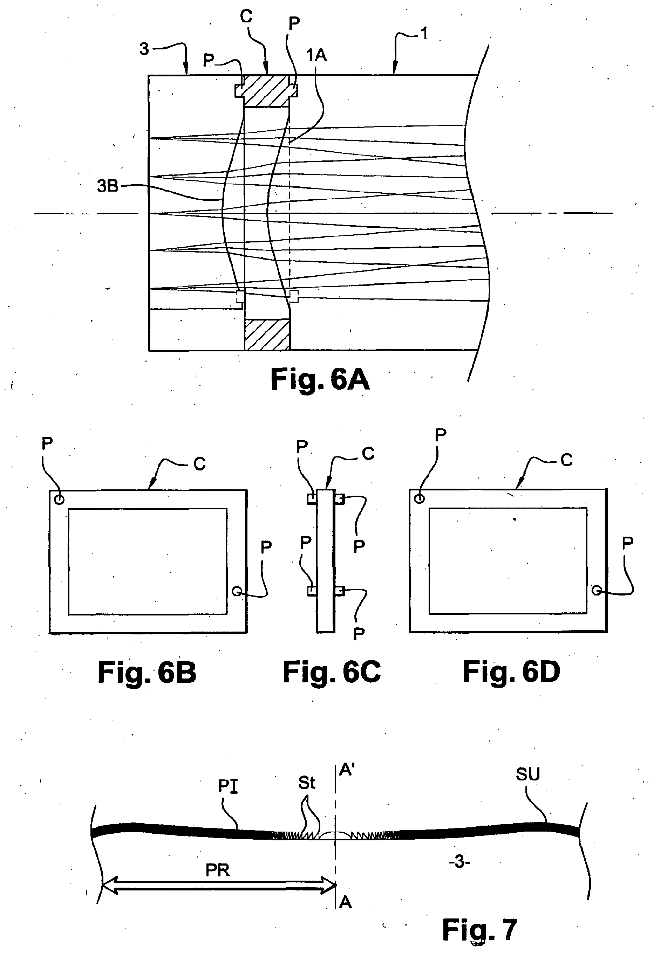

Afin d'éviter cependant la réalisation de moules complexes pour ces deux pièces optiques, une seconde variante de réalisation est représentée sur les figures 6A à 6D.

Alternativement, on peut donc réaliser la jonction de ces pièces à l'aide d'un cadre d'entretoise intermédiaire C qui est lui-même réalisé par injection. Avantageusement il est en matériau opaque noir pour éviter les réflexions parasites ou dépoli sur les côtés.

Ce cadre C est doté de zones d'appui plans et de pions de positionnement P sur chacune de ses faces, de préférence deux pions sur chacune de ces faces, pour se placer par rapport à la lentille de champ 3 et au conduit optique 1 qui comportent tous deux des trous correspondants sur leur face de sortie 3B et sur leur face d'entrée 1A. Un système de détrompeur par exemple grâce à la position des pions de chaque côté peut permettre de monter le cadre C dans le bon sens afin d'éviter des décentrements et défauts prismatiques alternatifs dûs aux possibles renversements de sens de montage.

Afin de minimiser la valeur du chromatisme transverse, on utilise une surface diffractive sur la face asphérique de sortie 3B de la lentille de champ 3 et/ou sur la face asphérique d'entrée 1A du conduit optique 1.

On peut utiliser une seule surface asphéro-diffractive, soit positionnée sur la face de sortie de la lentille de champ 3, soit positionnée sur la face d'entrée du conduit optique 1, soit deux surfaces asphérodiffractives positionnées sur chacun de ces éléments.

L'avantage de positionner les faces asphéro diffractives à cet endroit est qu'elles y sont à l'abri de toute agression environnementale.

L'épaisseur de la lentille de champ 3 est définie de sorte que la proximité de l'image de la surface diffractive de la lentille de champ soit située au-delà des plages d'accommodation standard d'un utilisateur amétrope. Afin d'éviter une mise au point par l'observateur de l'image virtuelle de l'écran miniature 2 du « kinoform » éventuellement présent sur la lentille de champ 3, celle-ci est donc relativement épaisse. Son épaisseur est calculée de sorte que la proximité de l'image du diffractif sur la face de la lentille de champ soit soit supérieure à 0 Dioptries, préférablement +2 Dioptries, soit inférieure à -4 Dioptries, préférablement -6 Dioptries ; ou alternativement, soit éloignée de la proximité de l'image de l'écran 2 d'au moins 4 Dioptries en valeur absolue.

A titre d'exemple, l'épaisseur de la lentille de champ 3 est d'au moins 3 mm, de préférence de 3,5mm.

La figure 7 représente en coupe transversale une surface asphéro-diffractive équipant la surface de sortie de la lentille de champ et/ou la surface d'entrée conduit optique.

On définit la surface utile SU des surfaces sphériques 3B ou 1A comme étant le disque de diamètre D le plus petit qui inclut tous les points d'impact des rayons lumineux du tracé de rayon pour une pupille d'oeil de 8 mm ou moins. La surface utile de la surface de sortie 3B, notée SC, de la lentille de champ est différente de celle de la surface d'entrée 1A, notée SE du conduit optique. En règle générale, de préférence, elle est inférieure à la surface utile SE d'entrée 1A du conduit optique.

Les surfaces SC et SE comportant à la fois une porteuse asphérique et éventuellement un kinoform, on peut les rappeler surfaces perfectionnées.

Une des caractéristiques fondamentales pour le contrôle de l'astigmatisme et de la courbure de champ est que sur les surfaces utiles des surfaces asphériques SC ou SE, le profil radial de ces asphères ou de ces porteuses asphériques présente au moins une inversion du signe de la courbure locale.

Avantageusement, plus précisément, ces surfaces asphériques comprennent sur leur surface utile SU au moins un point d'inflexion PI sur leur profil radial pour lequel la dérivée seconde selon la distance radiale par rapport au centre de la surface utile s'annule et change de signe à son passage.

Cette surface asphérique est ici de plus à symétrie de révolution. Sur la surface utile SU, le signe de la dérivée seconde du profil radial de cette surface porteuse de la surface diffractive change au moins une fois. Selon l'exemple représenté, cette surface présente un point d'inflexion PI le long de son profil radial PR pour lequel la condition de changement de signe de la dérivée seconde est remplie.

Si on note Z(h), l'équation du profil radial, cela signifie que sur le domaine de définition, ou domaine utile, correspondant à la portion d'espace sur laquelle est définie la surface utile, il existe au moins une valeur h0 telle que :

$$(d^2Z/dh^2)(h0)=0 \text{ et change de signe au passage de } h0.$$

Plus généralement, la surface perfectionnée SE ou SC comprend une surface dite utile traversée par la lumière en provenance de l'écran miniature et allant vers l'oeil du porteur pour laquelle il existe une inversion du signe de la courbure locale.

Le rayon d'impact sur cette surface utile SU étant appelée h, la surface asphérique porteuse du composant diffractif répond à l'équation :

$$Zsupport(h) = c_1.h^2/(1+SQRT(1-(1+k_1).c_1^2.h^2)) + A_1.h^4 + B_1.h^6 + C_1.h^8 +$$
$$D_1.h^{10} + E_1.h^{12} + F_1.h^{14} + G_1.h^{16} + H_1.h^{18} + J_1.h^{20}$$

où $Zsupport(h)$ est la coordonnée de la surface parallèle à l'axe z,
$c_1$ est la courbure au pôle de la surface,
$k_1$ le coefficient conique et
$A_1$, $B_1$, $C_1$... représentent les coefficients polynomiaux d'asphéricité de la surface.

$Zsupport(h)$ est l'équation générale d'une surface asphérique de révolution.

La surface diffractive est quant à elle réalisée par des stries ou sillons St concentriques sur cette surface utile SU : il s'agit d'un profil dit « kinoform ».

L'équation de la surface diffractive s'écrit comme celle d'une surface asphérique de révolution modulo une valeur de saut s :

$$D(h) = mod[Zdiffractif(h) , s]$$

avec

$$Zdiffractif(h) = c_2.h^2/(1+SQRT(1-(1+k_2).c_2^2.h^2)) + A_2.h^4 + B_2.h^6 + C_2.h^8 +$$
$$D_2.h^{10} + E_2.h^{12} + F_2.h^{14} + G_2.h^{16} + H_2.h^{18} + J_2.h^{20}$$

où $Zdiffractif(h)$ est la coordonnée de la surface parallèle à l'axe z,
$c_2$ est la courbure au pôle de la surface,
$k_2$ le coefficient conique et
$A_2$, $B_2$, $C_2$... représentent les coefficients polynomiaux d'asphéricité de la surface,
et $s = \lambda/[n(\lambda)-1]$
où $\lambda$ est la longueur d'onde de conception du composant diffractif, généralement choisie au milieu de la bande visible du spectre lumineux, soit dans notre cas 550 nm,
$n(\lambda)$ est l'indice du matériau constitutif du conduit de lumière pour la longueur d'onde de conception considérée $\lambda$.

Au final, l'équation de la surface représentée sur la figure 7 s'écrit sous la forme $Z(h) = Zsupport(h) + Zdiffractif(h)$.

De préférence, les porteuses asphériques des surfaces SC et SE sont de concavité opposée. Par ailleurs, la surface d'entrée 1A du conduit et la surface utile asphérique 3B de la lentille sont sensiblement parallèles.

La valeur absolue de la différence pour une abscisse radiale donnée des pentes de ladite surface d'entrée du conduit et ladite surface utile asphérique de la lentille est de préférence inférieure à 20% de la valeur maximale de la pente de l'une ou de l'autre de ces surfaces à cette abscisse.

Cette condition de quasi parallélisme des porteuses asphériques des surfaces SC et SE est très importante pour obtenir un bonne conception dans la configuration utilisée.

Cette condition concerne bien entendu les surfaces utiles de SC et SE, là où elles sont traversées par des faisceaux lumineux. Dans le cas général, les surfaces utiles de SC et SE sont légèrement différentes du fait de la divergence des faisceaux lumineux.

On définira le ratio Ru(P), coefficient d'harmonisation des surfaces utiles de SC et SE comme étant : Ru(p) = surface utile (SE) / surface utile (SC) pour une valeur donnée de diamètre de pupille p. De préférence, le calcul de Ru est réalisé avec un diamètre de pupille égal à 8mm.

Durant tout ce qui suit, on notera Ru cette valeur pour un diamètre de pupille de 8mm ou moins.

On ajustera par une affinité de coefficient Ru la surface utile de SC sur la surface utile de SE.

On étendra alors par une affinité selon l'axe des ordonnées Z, de coefficient Ru, la fonction des pentes de SC sur là nouvelle surface utile.

L'équation des pentes de SC harmonisée sur la surface utile de SE s'écrit alors :

Z_SC-harmo(h) = Z_SC(h/Ru), où :

$$Z\_SC(h)=d/dh[c_1.h^2/(1+SQRT(1-(1+k_1).c_1^2.h^2) + A_1.h^4 + B_1.h^6 + C_1.h^8 + D_1.h^{10} + E_1.h^{12} + F_1.h^{14} + G_1.h^{16} + H_1.h^{18} + J_1.h^{20}]$$

où $Z\_SC(h)$ est la dérivée première en h de la surface SC , $c_1$ est la courbure au pole de la surface, $k_1$ le coefficient conique et $A_1$, $B_1$, $C_1$... représentent les coefficients polynomiaux d'asphéricité de la porteuse de la surface SC. $Z\_SC(h)$ est la dérivée première d'une surface asphérique de révolution.

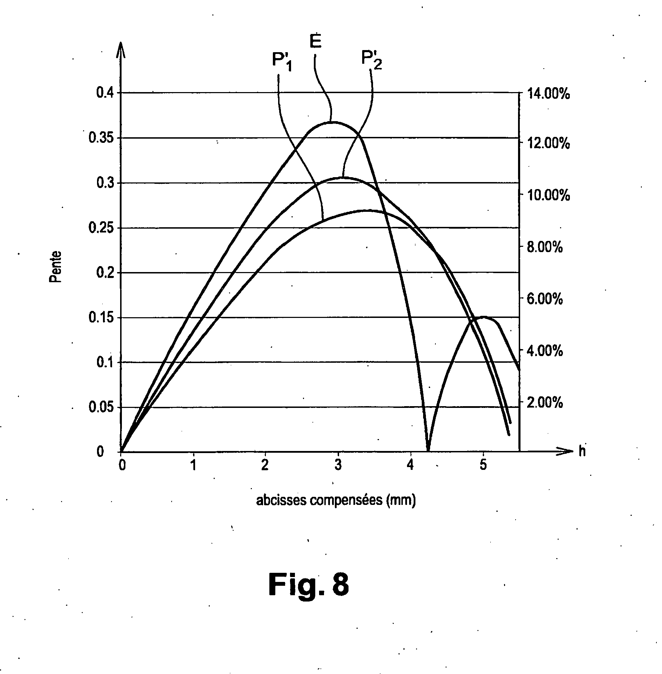

La figure 8 est un graphe représentant, en fonction de l'abscisse radiale h, d'une part la valeur de la pente $P'_1$ de la porteuse de la surface d'entrée 1A du conduit sur sa surface utile SE et d'autre part la valeur de la pente $P'_2$ de la porteuse de la surface asphérique de sortie 3B de la lentille de champ harmonisée sur la surface asphérique utile SE du conduit, rapportées à l'ordonnée de gauche sans unité, ainsi que l'écart relatif E entre ces deux valeurs par rapport au maximum des deux pentes, rapporté à l'ordonnée de droite en %.

Afin de réaliser optimalement une correction du chromatisme de la combinaison optique proposée, la surface d'entrée 1A du conduit et la surface utile asphérique 3B de la lentille de champ sont de type « kinoform ».

Cela permet :

- un double repliement de la tâche de chromatisme transverse et donc une meilleure correction

- une répartition de la puissance diffractive sur les deux surfaces et donc des diffractifs ayant moins d'anneaux, donc moins sujets à des défauts de parasitage des ordres supérieurs.

Une combinaison préférée consiste à équilibrer la puissance des deux surfaces diffractives sur la face SE et SC de façon à les rendre les plus égales possibles.

On choisira de préférence ces valeurs tel que :

$$ABS[[Pdiffractif(SC) - Pdiffractif(SE)] / max[Pdiffractif(SC),Pdiffractif(SE)]]$$
$$\text{inférieur ou égal à } 25\%$$

Alternativement, un autre arrangement favorable consiste à équilibrer le nombre d'anneaux sur les surfaces utiles de SC et SE. Si on appelle N_SE et N_SC le nombre d'anneaux sur les surfaces utiles de SC et SE respectivement, on fera en sorte que :

ABS[(Ru.N_SC)-N_SE]/max[(Ru.N_SC),N_SE] inférieur ou égal à 25%,
Ru étant le coefficient dh'armonisation des surfaces utiles SC et SE des faces d'entrée du conduit (1A) et de la surface asphérique (3B) de ladite lentille de champ

De préférence, selon l'invention, l'écran comporte un pixel couleur dont la taille est inférieure à 11 $\mu$m.

L'intérêt est de permettre de ne pas augmenter la taille de l'écran directement en proportion de sa résolution et donc de minimiser l'encombrement final des lunettes binoculaires.

Grâce à l'invention, des tailles d'image virtuelle supérieures à 21° peuvent être obtenues, avec une gamme de focale effective du système inférieure à 22 mm et pour des résolutions d'écran VGA ou supérieures.

Par des procédés d'injection thermoplastiques, les pièces constitutives sont de préférence réalisées en Zeonex, grade 330R par exemple, choisi pour ses très bonnes propriétés optiques, sa faible biréfringence et sa faible absorption d'eau.

## Revendications

1.    Agencement d'affichage électronique, comportant un conduit optique (1) destiné à transmettre des signaux de lumière émis d'un écran miniature (2), d'une de ses extrémités dite surface d'entrée (1A) à son autre extrémité dite surface de sortie (1B), vers l'oeil (O) d'un utilisateur pour la vision d'une image virtuelle, comportant une lentille de champ (3) intercalée entre ledit écran (2) et ladite surface d'entrée (1A), comportant une surface utile plane (3A) de coupe rectiligne disposée en face de l'écran (2) centré sur l'axe optique (L3) de ladite lentille de champ et une surface utile asphérique (3B), **agencement caractérisé en ce que** ladite surface asphérique est disposée en face de ladite surface d'entrée (1A), l'axe optique de la lentille de champ et celui du conduit étant confondus, et **en ce que** ladite surface utile plane (3A) est collée à l'écran (2).

2. Agencement selon la revendication précédente, **caractérisé en ce que** l'écran (2) est au moins partiellement encastré dans ladite surface utile plane (3A).

3. Agencement selon l'une des revendications précédentes, **caractérisé en ce que** ladite surface d'entrée (1A) et ladite surface utile asphérique (3B) sont séparées par un espace d'air.

4. Agencement selon la revendication précédente, **caractérisé en ce que** le positionnement relatif de ladite lentille de champ (3) et du conduit (1) est effectué au moyen d'un agencement d'au moins deux pions coopérant avec au moins deux trous correspondants.

5. Agencement selon la revendication précédente, **caractérisé en ce que** les deux pions (P3, P'3) sont portés par ladite lentille de champ (3) et les deux trous (T1, T1') par la surface d'entrée du conduit (1).

6. Agencement selon la revendication 4, **caractérisé en ce que** lesdits pions (P) sont portés par un cadre d'entretoise (C) et lesdits trous par le surface d'entrée (1A) du conduit et par la surface de sortie (3B) de la lentille de champ.

7. Agencement selon l'une des revendications précédentes, **caractérisé en ce que** ladite surface utile asphérique (3B) est diffractive.

8. Agencement selon la revendication précédente, **caractérisé en ce que** l'épaisseur de ladite lentille, de champ (3) est définie de sorte que la proximité de l'image de la surface diffractive (3B) de la lentille de champ soit située au-delà des plages d'accommodation standard d'un utilisateur amétrope.

9. Agencement selon la revendication précédente, **caractérisé en ce que** la proximité de l'image de la surface diffractive (3B) de la lentille de champ (3) est soit supérieure à 0 Dioptrie, soit inférieure à -4 Dioptries.

10. Agencement selon la revendication 8 ou 9, **caractérisé en ce que** la proximité de l'image de la surface diffractive de la lentille de champ (3) est éloignée de celle de l'image de l'écran (2) d'au moins 4 Dioptries en valeur absolue.

11. Agencement selon l'une des revendications précédentes, **caractérisé en ce que** ladite surface utile asphérique diffractive (3B) est de type « kinoform » répondant à l'équation d'une porteuse asphérique de révolution, sommée à celle d'un second composant asphérique de révolution modulo une profondeur de saut.

12. Agencement selon l'une des revendications précédentes, **caractérisé en ce que** ladite surface utile asphérique (3B) comprend une surface traversée par la lumière dont le signe de courbure locale change au moins une fois.

13. Agencement selon l'une des revendications précédentes, **caractérisé en ce que** ladite surface utile asphérique (3B) comprend au moins un point d'inflexion (PI) sur son profil radial pour lequel la dérivée seconde selon la distance radiale par rapport au centre de la surface utile s'annule et change de signe à son passage.

14. Agencement selon l'une des revendications précédentes, **caractérisé en ce que** ledit conduit (1) comporte également une surface diffractive asphérique sur sa surface d'entrée (1A).

15. Agencement selon la revendication précédente, **caractérisé en ce que** la surface utile asphérique diffractive (1A) de la surface d'entrée du dit conduit (1) est de type « kinoform » répondant à l'équation d'une porteuse asphérique de révolution, sommée à celle d'un deuxième composant asphérique de révolution modulo une profondeur de saut.

16. Agencement selon la revendications 14 ou 15, **caractérisé en ce que** la porteuse asphérique de ladite surface utile asphérique (1A) de la surface d'entrée du dit conduit (1) comprend une surface traversée par la lumière dont le signe de courbure locale change au moins une fois.

17. Agencement selon l'une des revendications 14 à 16, **caractérisé en ce que** ladite surface utile asphérique (1 A) de la surface d'entrée du dit conduit (1) comprend au moins un point d'inflexion sur son profil radial pour lequel la dérivée seconde selon la distance radiale par rapport au centre de la surface utile s'annule et change de signe à

EP 2 064 584 B1

**18.** Agencement selon l'une des revendications 14 à 17, **caractérisé en ce que** ladite surface d'entrée (1 A) du conduit et ladite surface utile asphérique (3B) de la lentille de champ sont sensiblement parallèles.

**19.** Agencement selon la revendication précédente, **caractérisé en ce que** la valeur absolue de la différence pour une abscisse radiale donnée des pentes de ladite surface utile d'entrée (1A) du conduit et des pentes harmonisées sur la surface utile de ladite surface utile asphérique (3B) de la lentille de champ, est inférieure à 20% de la valeur maximale de l'une ou de l'autre de ces valeurs à cette abscisse.

**20.** Agencement, selon l'une des revendications 14 à 19, **caractérisé en ce que** la valeur absolue de la différence des puissances diffractives des faces d'entrée du conduit (1A) et de la surface asphérique (3B) de ladite lentille de champ, divisée par le maximum de ces mêmes puissances diffractives est inférieur ou égal à 0.25.

**21.** Agencement selon l'une des revendications 14 à 19, **caractérisé en ce qu'** on impose que :

ABS[(Ru.N_SC)-N_SE]/max[(Ru.N_SC),N_SE] soit inférieure ou égal à 25% où
N_SE le nombre d'anneaux sur la surface utile (SC) de la face d'entrée du conduit (1A)
N_SC le nombre d'anneaux sur la surface utile (SE) de la surface asphérique (3B) de ladite lentille de champ,
Ru le coefficient d'harmonisation des surfaces utiles des faces d'entrée du conduit (1A) et de la surface asphérique (3B) de ladite lentille de champ, défini par la valeur de la surface utile (SE) de la face d'entrée du conduit (1A) divisée par la surface utile (SC) de la surface asphérique (3B) de ladite lentille de champ, pour une valeur donnée de diamètre de pupille.

**22.** Agencement selon la revendication précédente, **caractérisé en ce que** le calcul de Ru est réalisé avec un diamètre de pupille égal à 8mm.

**23.** Agencement selon l'une des revendications précédentes, **caractérisé en ce que** ledit écran (2) comporte un pixel couleur dont la taille est inférieure à 11 μm.

**Patentansprüche**

**1.** Elektronische Anzeigeanordnung mit einem optischen Kanal (1), der dazu bestimmt ist, von einem Miniaturbildschirm (2) emittierte Lichtsignale, von einem seiner Enden, Eingangsfläche (1A) genannt, bis zu seinem anderen Ende, Ausgangsfläche (1B) genannt, zum Auge (O) eines Benutzers zur Ansicht eines virtuellen Bilds zu übertragen, mit einer zwischen den Bildschirm (2) und die Eingangsfläche (1A) eingefügten Feldlinse (3), die eine ebene Nutzfläche (3A) mit geradem Schnitt, die gegenüber dem auf die optische Achse (L3) der Feldlinse zentrierten Bildschirm (2) angeordnet ist, und eine asphärische Nutzfläche (3B) aufweist, wobei die Anordnung **dadurch gekennzeichnet ist, dass** die asphärische Fläche gegenüber der Eingangsfläche (1A) angeordnet ist, die optische Achse der Feldlinse und diejenige des Kanals zusammenfallen, und dass die ebene Nutzfläche (3A) auf den Bildschirm (2) geklebt ist.

**2.** Anordnung nach dem vorhergehenden Anspruch, **dadurch gekennzeichnet, dass** der Bildschirm (2) mindestens teilweise in die ebene Nutzfläche (3A) eingesetzt ist.

**3.** Anordnung nach einem der vorhergehenden Ansprüche, **dadurch gekennzeichnet, dass** die Eingangsfläche (1A) und die asphärische Nutzfläche (3B) durch einen Luftraum getrennt sind.

**4.** Anordnung nach dem vorhergehenden Anspruch, **dadurch gekennzeichnet, dass** die relative Positionierung der Feldlinse (3) und des Kanals (1) mittels einer Anordnung von mindestens zwei Zapfen durchgeführt wird, die mit mindestens zwei entsprechenden Löchern zusammenwirken.

**5.** Anordnung nach dem vorhergehenden Anspruch, **dadurch gekennzeichnet, dass** die zwei Zapfen (P3, P'3) von der Feldlinse (3) und die zwei Löcher (T1, T1') von der Eingangsfläche des Kanals (1) getragen werden.

**6.** Anordnung nach Anspruch 4, **dadurch gekennzeichnet, dass** die Zapfen (P) von einem Abstandshalterrahmen (C) und die Löcher von der Eingangsfläche (1A) des Kanals und von der Ausgangsfläche (3B) der Feldlinse getragen werden.

9

7. Anordnung nach einem der vorhergehenden Ansprüche, **dadurch gekennzeichnet, dass** die asphärische Nutzfläche (3B) diffraktiv ist.

8. Anordnung nach dem vorhergehenden Anspruch, **dadurch gekennzeichnet, dass** die Dicke der Feldlinse (3) so definiert wird, dass die Nähe des Bilds der diffraktiven Fläche (3B) der Feldlinse sich jenseits der Standard-Anpassungsbereiche eines fehlsichtigen Benutzers befindet.

9. Anordnung nach dem vorhergehenden Anspruch, **dadurch gekennzeichnet, dass** die Nähe des Bilds der diffraktiven Fläche (3B) der Feldlinse (3) entweder höher als 0 Dioptrien oder niedriger als -4 Dioptrien ist.

10. Anordnung nach Anspruch 8 oder 9, **dadurch gekennzeichnet, dass** die Nähe des Bilds der diffraktiven Fläche der Feldlinse (3) von derjenigen des Bilds des Bildschirms (2) um mindestens 4 Dioptrien im Absolutwert entfernt ist.

11. Anordnung nach einem der vorhergehenden Ansprüche, **dadurch gekennzeichnet, dass** die diffraktive asphärische Nutzfläche (3B) von der Art « Kinoform » ist, die der Gleichung eines drehsymmetrischen asphärischen Trägers entspricht, summiert mit derjenigen eines zweiten drehsymmetrischen asphärischen Bauteils Modulo eine Sprungtiefe.

12. Anordnung nach einem der vorhergehenden Ansprüche, **dadurch gekennzeichnet, dass** die asphärische Nutzfläche (3B) eine vom Licht durchquerte Fläche aufweist, deren Vorzeichen lokaler Krümmung sich mindestens einmal ändert.

13. Anordnung nach einem der vorhergehenden Ansprüche, **dadurch gekennzeichnet, dass** die asphärische Nutzfläche (3B) mindestens einen Beugungspunkt (PI) auf ihrem radialen Profil aufweist, für den die zweite Ableitung gemäß dem radialen Abstand bezüglich der Mitte der Nutzfläche sich aufhebt und bei seinem Durchgang das Vorzeichen ändert.

14. Anordnung nach einem der vorhergehenden Ansprüche, **dadurch gekennzeichnet, dass** der Kanal (1) ebenfalls eine asphärische diffraktive Fläche auf seiner Eingangsfläche (1A) aufweist.

15. Anordnung nach dem vorhergehenden Anspruch, **dadurch gekennzeichnet, dass** die diffraktive asphärische Nutzfläche (1A) der Eingangsfläche des Kanals (1) von der Art « Kinoform » ist, die der Gleichung eines drehsymmetrischen asphärischen Trägers entspricht, summiert mit derjenigen eines zweiten drehsymmetrischen asphärischen Bauteils Modulo eine Sprungtiefe.

16. Anordnung nach Anspruch 14 oder 15, **dadurch gekennzeichnet, dass** der asphärische Träger der asphärischen Nutzfläche (1A) der Eingangsfläche des Kanals (1) eine vom Licht durchquerte Fläche enthält, deren Vorzeichen lokaler Krümmung sich mindestens einmal ändert.

17. Anordnung nach einem der Ansprüche 14 bis 16, **dadurch gekennzeichnet, dass** die asphärische Nutzfläche (1A) der Eingangsfläche des Kanals (1) mindestens einen Beugungspunkt auf ihrem radialen Profil enthält, für den die zweite Ableitung gemäß dem radialen Abstand bezüglich der Mitte der Nutzfläche sich aufhebt und bei seinem Durchgang das Vorzeichen ändert.

18. Anordnung nach einem der Ansprüche 14 bis 17, **dadurch gekennzeichnet, dass** die Eingangsfläche (1A) des Kanals und die asphärische Nutzfläche (3B) der Feldlinse im Wesentlichen parallel sind.

19. Anordnung nach dem vorhergehenden Anspruch, **dadurch gekennzeichnet, dass** der Absolutwert der Differenz für eine gegebene radiale Abszisse der Neigungen der Eingangsnutzfläche (1A) des Kanals und der auf die Nutzfläche der asphärischen Nutzfläche (3B) der Feldlinse abgestimmten Neigungen geringer als 20% des maximalen Werts des einen oder anderen dieser Werte auf dieser Abszisse ist.

20. Anordnung nach einem der Ansprüche 14 bis 19, **dadurch gekennzeichnet, dass** der Absolutwert der Differenz der Diffraktionsleistungen der Eingangsseiten (1A) des Kanals und der asphärischen Fläche (3B) der Feldlinse, dividiert durch das Maximum dieser gleichen Diffraktionsleistungen, geringer als oder gleich 0,25 ist.

21. Anordnung nach einem der Ansprüche 14 bis 19, **dadurch gekennzeichnet, dass** vorgegeben wird, dass:

ABS[(Ru.N SC)-N SE]/max[(Ru.N SC),N SE] geringer als oder gleich 25% ist, wobei

N_SE die Anzahl von Ringen auf der Nutzfläche (SC) der Eingangsseite (1A) des Kanals,

N_SC die Anzahl von Ringen auf der Nutzfläche (SE) der asphärischen Fläche (3B) der Feldlinse,

Ru der Abstimmungskoeffizient der Nutzflächen der Eingangsseiten (1A) des Kanals und der asphärischen Fläche (3B) der Feldlinse, definiert durch den Wert der Nutzfläche (SE) der Eingangsseite (1A) des Kanals dividiert durch die Nutzfläche (SC) der asphärischen Fläche (3B) der Feldlinse, für einen gegebenen Pupillendurchmesserwert, bedeutet.

22. Anordnung nach dem vorhergehenden Anspruch, **dadurch gekennzeichnet, dass** die Berechnung von Ru mit einem Pupillendurchmesser gleich 8 mm durchgeführt wird.

23. Anordnung nach einem der vorhergehenden Ansprüche, **dadurch gekennzeichnet, dass** der Bildschirm (2) ein Farbpixel aufweist, dessen Größe kleiner als 11 $\mu$m ist.

**Claims**

1. Electronic display assembly, comprising an optical conduit (1) intended to transmit light signals, emitted by a miniature screen (2), from one of its ends, referred to as the entrance surface (1A), to its other end, referred to as the exit surface (1B), and toward the eye (O) of a user for vision of a virtual image, comprising a field lens (3), inserted between said screen (2) and said entrance surface (1A), having a planar useful surface (3A) of rectilinear cross section placed facing the screen (2), which is centred on the optical axis (L3) of said field lens, and an aspherical useful surface (3B), assembly **characterised in that** said aspherical surface is placed facing said entrance surface (1A), the optical axis of the field lens and that of the conduit being coincident, and **in that** said planar useful surface (3A) is adhesively bonded to the screen (2).

2. Assembly according to the preceding claim, **characterised in that** the screen (2) is at least partially embedded into said planar useful surface (3A).

3. Assembly according to either of the preceding claims, **characterised in that** said entrance surface (1A) and said aspherical useful surface (3B) are separated by an air gap.

4. Assembly according to the preceding claim, **characterised in that** said field lens (3) and the conduit (1) are positioned relative to each other by means of an assembly of at least two pins interacting with at least two corresponding holes.

5. Assembly according to the preceding claim, **characterised in that** the two pins (P3, P'3) are borne by said field lens (3) and the two holes (T1, T1') by the entrance surface of the conduit (1).

6. Assembly according to Claim 4, **characterised in that** said pins (P) are borne by a spacer frame (C) and said holes by the entrance surface (1A) of the conduit and by the exit surface (3B) of the field lens.

7. Assembly according to one of the preceding claims, **characterised in that** said aspherical useful surface (3B) is diffractive.

8. Assembly according to the preceding claim, **characterised in that** the thickness of said field lens (3) is defined so that the proximity of the image of the diffractive surface (3B) of the field lens is located outside of the standard range of accommodation of an ametropic user.

9. Assembly according to the preceding claim, **characterised in that** the proximity of the image of the diffractive surface (3B) of the field lens (3) is either greater than 0 dioptres or less than -4 dioptres.

10. Assembly according to Claim 8 or 9, **characterised in that** the proximity of the image of the diffractive surface of the field lens (3) is distant from that of the image of the screen (2) by at least 4 dioptres in absolute value.

11. Assembly according to one of the preceding claims, **characterised in that** said diffractive aspherical useful surface (3B) is a "kinoform" surface respecting the equation of an axisymmetric aspherical carrier, summed with that of a second axisymmetric aspherical component modulo a step depth.

12. Assembly according to one of the preceding claims, **characterised in that** said aspherical useful surface (3B) comprises a surface through which light passes, the sign of the local curvature of which changes at least once.

13. Assembly according to one of the preceding claims, **characterised in that** said aspherical useful surface (3B) comprises at least one inflection point (PI) in its radial profile, at which the second derivative of radial distance from the centre of the useful surface equals zero and changes sign.

14. Assembly according to one of the preceding claims, **characterised in that** said conduit (1) also comprises an aspherical diffractive surface on its entrance surface (1A).

15. Assembly according to the preceding claim, **characterised in that** the diffractive aspherical useful surface (1A) of the entrance surface of said conduit (1) is a "kinoform" surface respecting the equation of an axisymmetric aspherical carrier, summed with that of a second axisymmetric aspherical component modulo a step depth.

16. Assembly according to Claim 14 or 15, **characterised in that** the aspherical carrier of said aspherical useful surface (1A) of the entrance surface of said conduit (1) comprises a surface through which light passes, the sign of the local curvature of which changes at least once.

17. Assembly according to one of Claims 14 to 16, **characterised in that** said aspherical useful surface (1A) of the entrance surface of said conduit (1) comprises at least one inflection point in its radial profile, at which the second derivative of radial distance from the centre of the useful surface equals zero and changes sign.

18. Assembly according to one of Claims 14 to 17, **characterised in that** said entrance surface (1A) of the conduit and said aspherical useful surface (3B) of the field lens are substantially parallel.

19. Assembly according to the preceding claim, **characterised in that** the absolute value of the difference, for a given radial abscissa, between the slopes of said useful entrance surface (1A) of the conduit and of the slopes harmonised to the useful area of said aspherical useful surface (3B) of the field lens, is smaller than 20% of the maximum value of one or other of these values at this abscissa.

20. Assembly according to one of Claims 14 to 19, **characterised in that** the absolute value of the difference between the diffractive powers of the entrance faces of the conduit (1A) and of the aspherical surface (3B) of said field lens, divided by the maximum of said diffractive powers, is smaller than or equal to 0.25.

21. Assembly according to one of Claims 14 to 19, **characterised in that**:

$ABS[(Ru.N\_SC)-N\_SE]/max[(Ru.N\_SC),N\_SE]$ is lower than or equal to 25%,
where:

N_SE is the number of rings in the useful area (SC) of the entrance face of the conduit (1A);
N_SC is the number of rings in the useful area (SE) of the aspherical surface (3B) of said field lens; and
Ru is the harmonisation coefficient of the useful areas of the entrance faces of the conduit (1A) and of the aspherical surface (3B) of said field lens, defined by the value of the useful area (SE) of the entrance face of the conduit (1A) divided by the useful area (SC) of the aspherical surface (3B) of said field lens, for a given value of pupil diameter.

22. Assembly according to the preceding claim, **characterised in that** Ru is calculated with a pupil diameter equal to 8 mm.

23. Assembly according to one of the preceding claims, **characterised in that** said screen (2) comprises a colour pixel that is smaller than 11 $\mu$m in size.

**Fig. 1**

**Fig. 2**

**Fig. 3**

**Fig. 4A**

**Fig. 4B**

**Fig. 5A**

**Fig. 5B**

**Fig. 5C**

15

Fig. 6A

Fig. 6B    Fig. 6C    Fig. 6D

Fig. 7

**Fig. 8**

EP 2 064 584 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0450655
- WO 2005124427 A
- GB 2274727 A